# EUROPÄISCHE PATENTSCHRIFT

(11) **EP 1 627 441 B1**
(45) Veröffentlichungstag und Bekanntmachung des Hinweises auf die Patenterteilung: **31.07.2013**
(21) Anmeldenummer: 04727888.2
(22) Anmeldetag: 16.04.2004
(51) Int. Cl.: H01M 8/02, H01M 8/04

(54) **BRENNSTOFFZELLE UND HEIZEINRICHTUNG EINER BRENNSTOFFZELLE**
FUEL CELL AND HEATING DEVICE FOR A FUEL CELL
PILE A COMBUSTIBLE ET SYSTEME DE CHAUFFAGE DE PILE A COMBUSTIBLE

(30) Priorität: 26.05.2003 DE 10323882
(43) Veröffentlichungstag der Anmeldung: 22.02.2006
(73) Patentinhaber: Siemens Aktiengesellschaft, 80333 München (DE)
(72) Erfinder: BASCHEK, Günther, 51766 Engelskirchen (DE); MATTEJAT, Arno, 91056 Erlangen (DE)
(86) Internationale Anmeldenummer: PCT/EP2004/004066
(87) Internationale Veröffentlichungsnummer: WO 2004/107486

(56) Entgegenhaltungen:
- EP-A- 0 851 518
- EP-A- 0 978 891
- EP-A- 1 009 051
- WO-A-02/075833
- US-A- 4 649 091
- US-A- 4 678 724
- PATENT ABSTRACTS OF JAPAN Bd. 1999, Nr. 02, 26. Februar 1999 (1999-02-26) & JP 10 308227 A (FUJI ELECTRIC CO LTD), 17. November 1998 (1998-11-17)
- PATENT ABSTRACTS OF JAPAN Bd. 0185, Nr. 99 (E-1631), 15. November 1994 (1994-11-15) & JP 6 231793 A (MITSUBISHI HEAVY IND LTD), 19. August 1994 (1994-08-19)

## Beschreibung

Die Erfindung betrifft eine Brennstoffzelle mit einer zwischen Elektrolyt-Elektrodeneinheiten angeordneten Separatorplatte, welche von einem Kühlmittel durchströmbar ist. Eine derartige Brennstoffzelle ist beispielsweise aus der EP 0 876 686 B1 bekannt. Des Weiteren betrifft die Erfindung eine Heizeinrichtung für eine Brennstoffzelle.

Die aus der EP 0 876 686 B1 bekannte Brennstoffzelle weist zwischen zwei Elektrolyt-Elektrodeneinheiten jeweils eine Separatorplatte auf, welche drei Strömungsräume voneinander trennt, nämlich einen an eine Anode einer ersten Elektrolyt-Elektrodeneinheit grenzenden Gasraum, einen an eine Kathode einer zweiten Elektrolyt-Elektrodeneinheit grenzenden Gasraum und einen Kühlmittelraum für ein flüssiges Kühlmittel. Der Kühlmittelraum ist dabei von einer Separatorplatte, bestehend aus einer Einheit von zwei aufeinander liegenden Platten, begrenzt. Zusätzlich zur Strömungsleitung hat die Separatorplatte die Aufgabe, eine elektrische Verbindung zwischen den gegenüberliegenden Elektrolyt-Elektrodeneinheiten herzustellen. Je ausgedehnter die Kontaktflächen zwischen den einzelnen Platten der Separatorplatte sind, desto höher ist der Leitwert der durch die Separatorplatte gebildeten elektrischen Verbindung zwischen den benachbarten Elektrolyt-Elektrodeneinheiten. Jedoch wird durch eine großflächige Kontaktierung der beiden Platten die Strömung des Kühlmittels eingeschränkt.

Der Erfindung liegt die Aufgabe zugrunde, eine Brennstoffzelle anzugeben, welche den konkurrierenden Anforderungen an eine Separatorplatte hinsichtlich der Kühlung einerseits und der elektrischen Eigenschaften andererseits in besonders hohem Maße Rechnung trägt. Des Weiteren ist es Aufgabe der Erfindung, eine für eine Brennstoffzelle, insbesondere eine feuchtereinheit einer Brennstoffzelle, besonders geeignete Heizeinrichtung anzugeben.

Diese Aufgabe wird erfindungsgemäß gelöst durch eine Brennstoffzelle mit den Merkmalen des Anspruchs 1 sowie durch eine Heizeinrichtung mit den Merkmalen des Anspruchs 7. Die Brennstoffzelle weist in prinzipiell bekannter Art zwei sich parallel gegenüberliegende Elektrolyt-Elektrodeneinheiten auf, zwischen denen eine Separatorplatte angeordnet ist, die drei Fluidräume trennt, nämlich zwei jeweils den Elektrolyt-Elektrodeneinheiten zugewandte Gasräume und einen zwischen aneinander liegenden geprägten Platten der Separatorplatte gebildeten Kühlraum. Dieser Kühlraum, insbesondere für ein flüssiges Kühlmittel, ist aufgeteilt in zwei jeweils einer Platte und damit jeweils einer Elektrolyt-Elektrodeneinheit zugewandten Teilräume, wobei ein Kühlmittel ausschließlich alternierend durch beide Teilräume durchströmbar ist.

Die Prägungen sind im Wesentlichen rund, in der Art von Noppen ausgebildet. Die eine Noppenstruktur aufweisenden Platten sind relativ zueinander versetzt, so dass Strömungswege für das Kühlmittel zwischen den Platten freigegeben sind.

Eine gedachte Teilungsebene zwischen den Teilräumen durchschneidet die Separatorplatte bevorzugt mittig sowie parallel zu den benachbarten Elektrolyt-Elektrodeneinheiten. Vorzugsweise in der Teilungsebene sind die beiden geprägten Platten der Separatorplatte an Kontaktflächen miteinander verbunden. Die Kontaktflächen sind jedoch nicht notwendigerweise in einer einzigen Ebene angeordnet und nicht zwangsläufig parallel zu den Elektrolyt-Elektrodeneinheiten ausgerichtet.

In jedem Fall ist der Kühlmittelraum derart ausgebildet, dass eine Strömung des Kühlmittels durch die Separatorplatte ausschließlich auf Strömungswegen möglich ist, die aufeinanderfolgend beide Teilräume durchschneiden. Mit anderen Worten: Das Kühlmittel durchströmt alternierend beide Teilräume. Hierbei wechselt jedes die Separatorplatte durchströmendes Teilchen des Kühlmittels bevorzugt mehrfach zwischen beiden Teilräumen. Durch das zwangsweise Strömen von einem Teilraum des Kühlmittelraums zum anderen Teilraum ist eine gute Durchmischung des Kühlmittels im Kühlmittelraum sowie eine gute Wärmeübertragung zwischen den den Elektrolyt-Elektrodeneinheiten zugewandten Oberflächen der Separatorplatte und dem Kühlmittel gegeben. Die Temperaturgradienten zwischen benachbarten Elektrolyt-Elektrodeneinheiten werden damit gering gehalten. Die Kontaktflächen zwischen den einzelnen Platten der Separatorplatte befinden sich nicht nur am Rand der Separatorplatte sondern auch im Inneren der in der Regel rechteckigen Fläche der Separatorplatte. Diese inneren Kontaktflächen dienen nicht nur der Leitung des Kühlmittels innerhalb der Teilräume, sondern ebenso der elektrischen Kontaktierung zwischen den einzelnen Platten. Der elektrische Strom zwischen beabstandeten Elektrolyt-Elektrodeneinheiten teilt sich somit innerhalb der Separatorplatte auf mehrere Kontaktflächen auf. Bevorzugt sind die Kontaktflächen zumindest annähernd gleichmäßig über die Fläche der Separatorplatte verteilt. Auf diese Weise sind Bereiche erhöhter Stromdichte und damit erhöhter Wärmeentwicklung vermieden oder zumindest nur gering ausgeprägt.

Nach bevorzugten Ausgestaltungen weisen die aufeinander liegenden Platten zumindest annähernd identische Prägungen auf. Zumindest eine der Platten weist keine mit der senkrecht zu den Elektrolyt-Elektrodeneinheiten angeordneten Symmetrieebene der Separatorplatte identische Symmetrieebene der Noppenprägung auf. Sofern beide Noppenstrukturen der Platten jeweils eine Symmetrieebene - senkrecht zur Platte - aufweisen, sind diese Symmetrieebenen zueinander versetzt.

Um einen besonders geringen elektrischen Widerstand zwischen den aufeinander liegenden Platten zu erreichen, sind deren Kontaktflächen vorzugsweise mit einer geeigneten Beschichtung, insbesondere galvanischen Beschichtung, bevorzugt einer Vergoldung, versehen. Die Gesamtfläche der Kontaktflächen zwischen den Platten beträgt vorzugsweise mindestens 10%, insbesondere mindestens 20%, der fluidbeaufschlagbaren Gesamtfläche der Separatorplatte. Um eine ausreichend widerstandsarme Strömung des Kühlmittels in der Separatorplatte zu ermöglichen, weisen die Kontaktflächen in der Summe bevorzugt eine Fläche von nicht mehr als 90%, insbesondere nicht mehr als 80%, der gesamten Separatorfläche auf.

Eine erfindungsgemäße Heizeinrichtung für einen Brennstoffzellenblock, insbesondere für einen Befeuchter einer Brennstoffzelle mit den Merkmalen des Anspruchs 1, weist ein Heizelement als Strömungsleitelement auf, welches prinzipiell entsprechend der Separatorplatte der Brennstoffzelle aufgebaut ist. Die Heizeinrichtung ist anstelle von Elektrolyt-Elektrodeneinheiten seitlich durch Randplatten begrenzt. Die im Zusammenhang mit der Brennstoffzelle aufgeführten Weiterbildungen und Vorteile gelten, mit Ausnahme der elektrischen Eigenschaften, sinngemäß auch für die Heizeinrichtung. Das Heizmedium kann entweder innerhalb oder außerhalb des zwischen den Platten gebildeten Strömungsraums geführt sein. Im jeweils anderen Strömungsraum beziehungsweise den anderen Strömungsräumen befindet sich das zu beheizende Medium.

Der Vorteil der Erfindung liegt insbesondere darin, dass zwei eine Separatorplatte bildende Platten einer Brennstoffzelle derart verbunden sind, dass nicht ausschließlich im rahmenförmigen Randbereich sondern auch im Innenbereich des Separators eine Stromleitung senkrecht zu den Elektrolyt-Elektrodeneinheiten der Brennstoffzelle ermöglicht ist, wodurch die Separatorplatte einen besonders geringen, nahezu gleichmäßig über die Fläche verteilten elektrischen Widerstand aufweist. Hierbei ist durch die Anordnung der im Allgemeinen regelmäßig angeordneten Erhebungen beziehungsweise Vertiefungen der Platten sowie der Kontaktflächen zwischen den Platten zugleich ein Strömungskanal für das Kühlmedium geschaffen, welcher abwechselnd an beide gegenüberliegende Oberflächen der Separatorplatte grenzt und somit eine intensive und gleichmäßige Wärmeabfuhr von den benachbarten Elektrolyt-Elektrodeneinheiten ermöglicht. In besonders rationeller Weise wird eine Wärmeübertragungseinrichtung mit dem Aufbau entsprechend der Separatorplatte zugleich als Heizelement für einen Befeuchter der Brennstoffzelle genutzt.

Nachfolgend werden mehrere Ausführungsbeispiele der Erfindung anhand einer Zeichnung näher erläutert. Hierin zeigen:
- FIG 1: eine geprägte Platte als Teil einer Separatorplatte einer Brennstoffzelle,
- FIG 2: eine aus zwei geprägten Platten aufgebaute Separatorplatte,
- FIG 3: in teilweise geschnittener Draufsicht die Separatorplatte nach FIG 2,
- FIG 4: ausschnittsweise eine Separatorplatte mit Kühlmittelanschlusskanälen,
- FIG 5: in einer Gesamtansicht eine Separatorplatte mit einer Noppenprägung.

Einander entsprechende Teile sind in allen Figuren mit den gleichen Bezugszeichen versehen.

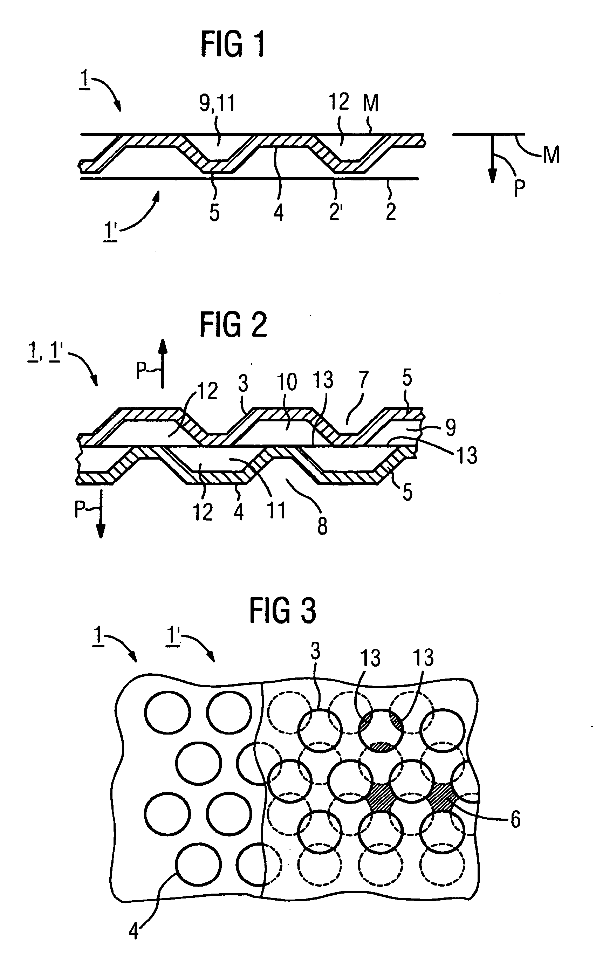

Die FIG 1 bis 3 zeigen jeweils ausschnittsweise im Querschnitt bzw. in einer Draufsicht eine Separatorplatte 1 einer nicht weiter dargestellten, prinzipiell beispielsweise aus der EP 0 876 686 B1 bekannten Brennstoffzelle. Eine der Separatorplatte 1, welche aus zusammengefügten Platten 3,4 gebildet ist, benachbarte Elektrolyt-Elektrodeneinheit 2 ist in FIG 1 lediglich angedeutet. Jede Platte 3,4 weist eine Prägung 5 in Form einer Noppenstruktur auf, wobei die Prägerichtung P der in FIG 2 unten angeordneten Platte 4 der Prägerichtung der oben angeordneten Platte 3 entgegengerichtet ist. Die ursprüngliche Blechebene der Platten 3,4 bildet eine Mittelebene M. In der Mittelebene M sind die Platten 3,4, wie insbesondere aus FIG 3 hervorgeht, an Kontaktflächen 6 elektrisch miteinander verbunden. Die einzelnen, voneinander getrennten Kontaktflächen 6 sind, wie weiter aus FIG 3 hervorgeht, gleichmäßig über die Fläche der Separatorplatte 1 verteilt.

Durch die zwischen benachbarten Elektrolyt-Elektrodeneinheiten 2 angeordnete Separatorplatte 1 sind drei Fluidräume 7,8,9 definiert, nämlich jeweils ein an eine Elektrolyt-Elektrodeneinheit 2 grenzender Gasraum 7,8 sowie ein zwischen den Platten 3,4 angeordneter Kühlmittelraum 9 für ein flüssiges Kühlmittel, insbesondere Wasser. Der Kühlmittelraum 9 teilt sich auf in zwei an der Mittelebene M aneinander grenzende Teilräume 10,11, welche jeweils aus einer Vielzahl noppenförmiger Vertiefungen 12 gebildet sind. Ein Strömen von Kühlmittel parallel zur Mittelebene M durch die Separatorplatte 1 ist möglich, da die Platten 3,4 derart relativ zueinander versetzt sind, dass eine Vertiefung 12 einer Platte 3,4 jeweils mit drei Vertiefungen 12 der gegenüberliegenden Platte 4,3 durch einen Überströmabschnitt 13 verbunden ist. Hierdurch ist eine netzförmige Kühlraumstruktur gebildet, die die gesamte Fläche der Separatorplatte 1 überzieht. Beim Strömen des Kühlmittels von einer Vertiefung 12 einer Platte 3,4 in die gegenüberliegende Platte 4,3 wird das Kühlmittel zwangsläufig von einem Teilraum 10,11 in den gegenüberliegenden Teilraum 11,10 geleitet. Das Kühlmittel erfährt somit ständig eine Richtungsänderung normal zur Separatorplatte 1. Zusätzlich wird das Kühlmittel durch die versetzte Anordnung der Vertiefungen 12 auch ständig in Richtungen parallel zur Mittelebene M umgelenkt. Jedes Teilchen des Kühlmittel beschreibt somit, vergleichbar etwa der Strömung in einer Schüttung, eine dreidimensionale Strömungsbahn. Insgesamt ist damit eine sehr gleichmäßig Durchmischung des Kühlmittels innerhalb der Separatorplatte 1 sowie eine sehr gute Wärmeübertragungsleistung zwischen den Elektrolyt-Elektrodeneinheiten 2 und dem Kühlmittel erreicht. Selbst falls Kühlmittel nur an einer Stelle in die Separatorplatte 1 eingeleitet wird, erfolgt auf kurzem Weg eine Verteilung in die Breite. Die Strömung erfolgt mit einem gleichmäßigen Strömungswiderstand innerhalb der Fläche der Separatorplatte 1. Etwaige Verteilerbleche oder Abstandshalter zwischen den Platten 3,4 oder zwischen benachbarten Elektrolyt-Elektrodeneinheiten 2 sind nicht erforderlich. Der Verzicht auf solche Bauteile trägt zusätzlich zur verschachtelten Anordnung von Kühlmittelraum 9 und Gasräumen 7,8, welche durch die Noppenstruktur der Platten 3,4 gegeben ist, zum besonders schmalen Aufbau der Brennstoffzelle bei. Die Temperaturverteilung in der Mittelebene M ist dabei trotz des Verzichts auf strömungsleitende Bauteile zusätzlich zur auch als Bipolarplatte oder Kühlkarte bezeichneten Separatorplatte 1 sehr gleichmäßig. Dies trägt zu einer hohen erreichbaren Leistung und einem hohen Wirkungsgrad der Brennstoffzelle bei. Weiterhin trägt hierzu die realisierbare Fertigungspräzision bei. Eine hohe Präzision wird dadurch begünstigt, dass die Separatorplatten 1 bei der Fertigung der Brennstoffzelle verzugsfrei, ohne Lötarbeiten, zwischen die Elektrolyt-Elektrodeneinheiten 2 einsetzbar sind.

Die genannten Vorteile der Separatorplatte 1 kommen ebenso zum Tragen, wenn diese als Heizelement oder Heizregister in einer Heizeinrichtung eines Befeuchters für die Brennstoffzelle eingesetzt wird. Sämtliche Figuren zeigen auch den Aufbau eines Heizelementes 1'. In diesem Fall fungiert entweder der zwischen den Platten 3,4 angeordnete Fluidraum 9 oder mindestens einer der außerhalb der Platten 3,4 angeordneten Fluidräume 7,8 als von einem Heizmedium durchströmter Heizmittelraum. Das zu beheizende Medium befindet sich in mindestens einem der verbleibenden Fluid- oder Strömungsräume 7,8,9. Anstelle der Elektrolyt-Elektrodeneinheiten 2 ist die Anordnung durch Randplatten 2' begrenzt.

Im Fall des Einsatzes der Separatorplatte 1 in einer Brennstoffzelle dient die Separatorplatte 1 auch zur elektrischen Verbindung zwischen benachbaren Elektrolyt-Elektrodeneinheiten 2. Der elektrische Strom fließt normal zur Mittelebene M durch die Platten 3,4 und die Kontaktflächen 6. Durch die gleichmäßige und insgesamt großflächige Verteilung der Kontaktflächen 6 innerhalb der Separatorplatte 1 ist eine elektrische Verbindung mit kurzen Strompfaden und sehr geringem Widerstand gegeben. Zur Verbesserung des Leitwertes sind die Kontaktflächen 6 der Platten 3,4 vergoldet. Die geringe Verlustleistung trägt zusätzlich zur gleichmäßigen Verteilung des Stromflusses über die Separatorplatte 1 zu einer hohen Leistung und einem hohen Wirkungsgrad der Brennstoffzelle bei.

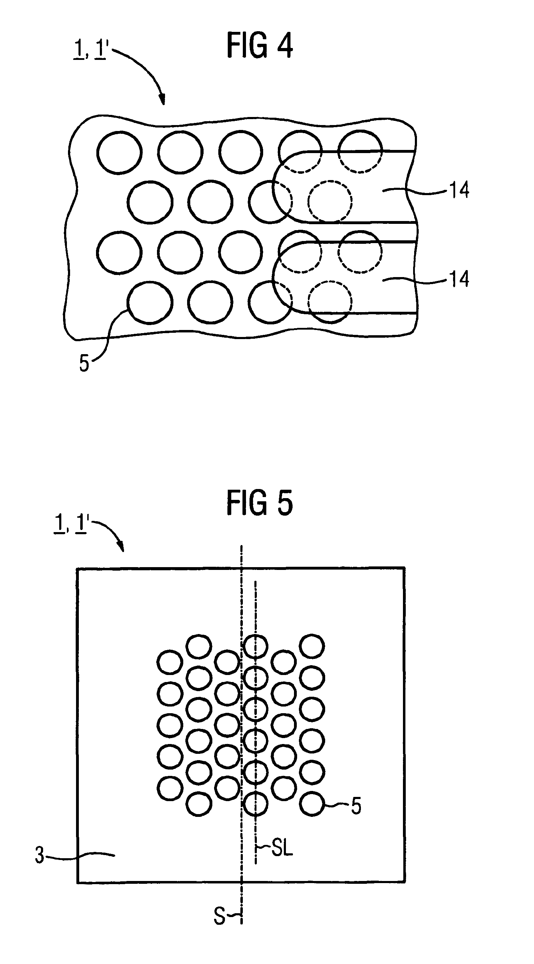

Die in FIG 4 dargestellte Separatorplatte 1 ist entsprechend dem Ausführungsbeispiel nach den FIG 1 bis 3 aufgebaut. Zusätzlich sind in FIG 4 röhrenförmige Räume bildende Vertiefungen 14 für den Anschluss eines nicht dargestellten Radialkanals für das Kühlmittel sichtbar. Entsprechende Vertiefungen, welche ebenfalls Verbindungen zu nicht dargestellten, senkrecht zur Zeichenebene verlaufenden Kanälen herstellen, befinden sich auch auf der gegenüberliegenden, in der Darstellung linken Seite der Separatorplatte 1. Die Vertiefungen 14 in der Platte 3,4 erhöhen deren Dicke nicht oder nicht wesentlich. Die Strömungsrichtung des Kühlmittels im Kühlmittelraum 9 kann eine beliebige Winkelrelation zu den Strömungsrichtungen der Gase, insbesondere Wasserstoff und Sauerstoff, in den Gasräumen 7,8 aufweisen.

Die FIG 5 verdeutlicht allgemeine Merkmale der Prägungen 5 der Platten 3,4 anhand je eines Ausführungsbeispiels mit einer noppenförmigen Prägung 5. Im Ausführungsbeispiel ist eine Symmetrielinie S der rechteckigen Separatorplatte 1 eingezeichnet. Die in den Darstellungen nicht sichtbare, auf der dem Betrachter abgewandten Seite der Separatorplatte 1 angeordnete Prägung 5 ist jeweils symmetrisch zur Symmetrielinie S ausgebildet. Dagegen ist die in den Darstellungen sichtbare Prägung 5 auf der dem Betrachter zugewandten Platte 3, wie anhand einer Prägesymmetrielinie SL erkennbar, relativ zur Symmetrielinie S verschoben (FIG 5).

## Patentansprüche

1. Brennstoffzelle mit einer zwischen Elektrolyt-Elektrodeneinheiten (2) angeordneten Separatorplatte (1), welche aus zwei jeweils eine Prägung (5) aufweisenden, sich an Kontaktflächen (6) berührenden Platten (3,4) gebildet ist, wobei durch die Prägungen (5) zwischen den beiden Platten (3,4) ein Fluidraum (9) für ein Kühlmittel und zwischen jeder Platte (3,4) und der jeweils benachbarten Elektrolyt-Elektrodeneinheit (2) ein Fluidraum (7,8) für ein Gas gebildet ist, wobei der Fluidraum (9) für das Kühlmittel zwei jeweils einer Platte (3,4) zugewandte Teilräume (10,11) aufweist und vom Kühlmittel ausschließlich alternierend durch beide Teilräume (10,11) durchströmbar ist, **dadurch gekennzeichnet, dass** die Prägungen (5) als im Wesentlichen runde Vertiefungen in der Art von Noppen ausgebildet sind und dass die eine Noppenstruktur aufweisenden Platten (3,4) relativ zueinander versetzt sind, so dass Strömungswege für das Kühlmittel zwischen den Platten (3,4) freigegeben sind.

2. Brennstoffzelle nach Anspruch 1,
**dadurch gekennzeichnet , dass** die Platten (3,4) zumindest annähernd identische Prägungen (5) aufweisen.

3. Brennstoffzelle nach einem der Ansprüche 1 bis 2,
**dadurch gekennzeichnet , dass** die Kontaktflächen (6) vergoldet sind.

4. Brennstoffzelle nach einem der Ansprüche 1 bis 3,
**dadurch gekennzeichnet , dass** die Kontaktflächen (6) zumindest annähernd gleichmäßig über die Fläche der Separatorplatte (1) verteilt sind.

5. Brennstoffzelle nach einem der Ansprüche 1 bis 4,
**dadurch gekennzeichnet , dass** die Gesamtfläche der Kontaktflächen (6) mindestens 10% der Fläche der Separatorplatte (1) beträgt.

6. Brennstoffzelle nach einem der Ansprüche 1 bis 5,
**dadurch gekennzeichnet , dass** die Gesamtfläche der Kontaktflächen (6) höchstens 90% der Fläche der Separatorplatte (1) beträgt.

7. Heizeinrichtung einer Brennstoffzelle nach einem der Ansprüche 1 bis 6, mit einem zwischen gegenüberliegenden Randplatten (2') angeordneten Strömungsleitelement,
**dadurch gekennzeichnet , dass** das Strömungsleitelement als Heizelement (1') aus zwei jeweils eine Prägung (5) aufweisenden Platten (3,4) gebildet ist, wobei jeweils ein Strömungsraum (7,8) zwischen dem Heizelement (1') und einer Randplatte (2') und ein weiterer Strömungsraum (9) zwischen den Platten (3,4) gebildet ist, wobei letztgenannter Strömungsraum (9) zwei jeweils einer Platte (3,4) zugewandte Teilräume (10,11) aufweist, welche ausschließlich alternierend durchströmbar sind.

## Claims

1. Fuel cell with a separator plate (1) disposed between electrolyte-electrode units (2), which separator plate is formed from two plates (3, 4) each having an embossing (5) and touching at contact surfaces (6), a fluid chamber (9) for a coolant being formed by the embossings (5) between the two plates (3, 4) and a fluid chamber (7, 8) for a gas being formed between each plate (3, 4) and the adjacent electrolyte-electrode unit (2) in each case,
wherein the fluid chamber (9) for the coolant has two subchambers (10, 11) each facing a plate (3, 4) and that coolant can only flow through said fluid chamber through the two subchambers (10, 11) on an alternating basis, **characterised in that** the embossings (5) are formed as essentially circular depressions in the manner of ribs and that the plates (3, 4) comprising a rib-shaped structure are offset relative to one another such that flow paths for the coolant are released between the plates (3, 4).

2. Fuel cell according to claim 1,
**characterised in that** the plates (3, 4) have at least approximately identical embossings (5).

3. Fuel cell according to one of claims 1 to 2,
**characterised in that** the contact surfaces (6) are gold-plated.

4. Fuel cell according to one of claims 1 to 3,
**characterised in that** the contact surfaces (6) are distributed at least approximately uniformly over the surface of the separator plate (1).

5. Fuel cell according to one of claims 1 to 4,
**characterised in that** the total surface area of the contact surfaces (6) is at least 10% of the surface area of the separator plate (1).

6. Fuel cell according to one of claims 1 to 5,
**characterised in that** the total surface area of the contact surfaces (6) is no more than 90% of the surface area of the separator plate (1).

7. Heating device of a fuel cell according to one of claims 1 to 6, having a flow directing element disposed between opposite edge plates (2'),
**characterised in that** the flow directing element is formed as a heating element (1') from two plates (3, 4) each having an embossing (5), a flow chamber (7, 8) being formed between the heating element (1') and an edge plate (2') in each case and another flow chamber (9) being formed between the plates (3, 4), the last mentioned flow chamber (9) having two subchambers (10, 11) each facing a plate (3, 4), which subchambers provide a flow path solely on an alternating basis.

## Revendications

1. Pile à combustible ayant une plaque (1) formant séparateur, qui est disposée entre deux unités (2) d'électrolyte-électrode et qui est formée de deux plaques (3,4) ayant respectivement une empreinte (5) et se touchant en des surfaces (6) de contact, dans laquelle il est formé, par les empreintes (5) entre les deux plaques (3,4), un espace (9) pour du fluide pour un fluide de refroidissement et, entre chaque plaque (3,4) et l'unité (2) voisine respectivement d'électrolyte-électrode, un espace (7,8) pour du fluide pour un gaz, dans laquelle l'espace (9) pour du fluide pour le fluide de refroidissement a deux sous-espaces (10,11) tournés respectivement vers une plaque (3,4) et dans lequel le fluide de refroidissement peut passer exclusivement en alternance dans les deux sous-espaces (10,11), **caractérisée en ce que** les empreintes (5) sont constituées sous la forme de cavités sensiblement rondes à la manière de bossages et **en ce que** les plaques (3,4) ayant une structure en bossage sont décalées les unes par rapport aux autres de manière à dégager des voies d'écoulement du fluide de refroidissement entre les plaques (3,4).

2. Pile à combustible suivant la revendication 1, **caractérisée en ce que** les plaques (3,4) ont des empreintes (5) au moins à peu près identiques.

3. Pile à combustible suivant l'une des revendications 1 à 2, **caractérisée en ce que** les surfaces (6) de contact sont dorées.

4. Pile à combustible suivant l'une des revendications 1 à 3, **caractérisée en ce que** le surfaces (6) de contact sont réparties au moins à peu près uniformément sur la surface de la plaque (1) formant séparateur.

5. Pile à combustible suivant l'une des revendications 1 à 4, **caractérisée en ce que** toute la surface des surfaces (6) de contact représente au moins 10 % de la surface de la plaque (1) formant séparateur.

6. Pile à combustible suivant l'une des revendications 1 à 5, **caractérisée en ce que** toute la surface des surfaces (6) de contact représente, au plus, 90 % de la surface de la plaque (1) formant séparateur.

7. Dispositif de chauffage d'une pile à combustible suivant l'une des revendications 1 à 6, comprenant un élément de conduite d'un écoulement disposé entre deux plaques (2') de bord opposées,
**caractérisé en ce que** l'élément de conduite d'un écoulement est constitué sous la forme d'un élément (1') de chauffage composé de deux plaques (3,4) ayant respectivement une empreinte (5), respectivement un espace (7,8) d'écoulement étant formé entre l'élément (1') de chauffage et une plaque (2') de bord et un autre espace (9) d'écoulement étant formé entre les plaques (3,4), l'espace (9) d'écoulement mentionné en dernier ayant deux sous-espaces (10,11) tournés respectivement vers une plaque (3,4), lesquels peuvent être parcourus exclusivement en alternance.
